# EUROPEAN PATENT APPLICATION

(11) **EP 4 420 771 A1**
(43) Date of publication of application: **28.08.2024**
(21) Application number: 22883027.9
(22) Date of filing: 20.10.2022
(51) Int. Cl.: B01J 20/16, B01J 20/20, B01J 20/04, B01J 20/06, B01J 20/10, B01D 53/14, B01D 53/02

(54) **PRODUCT THAT ABSORBS HYDROGEN SULPHIDE**

(30) Priority: 22.10.2021 ES 202130994
(71) Applicant: Greenkeeper Iberia, S.L., 28031 Madrid (ES)
(72) Inventor: GELI PONS, Ramón, 28031 MADRID (ES); MORENO GUERRERO, Carmen, 28031 MADRID (ES); MURILLO GARCÍA, Nazaret, 28031 MADRID (ES); HERNÁNDEZ SICILIA, Jerónimo, 28031 MADRID (ES)
(74) Representative: Munoz Garcia, Antonio
(86) International application number: PCT/ES2022/070669
(87) International publication number: WO 2023/067225

(57) **Abstract**

Product that absorbs hydrogen sulphide, applicable to absorb H₂S (hydrogen sulphide) generated in facilities such as plants for the treatment of urban wastewater or sewage or in equipment exposed to corrosion or odor generation in general, which has a composition comprising: zeolites, KOH, MgO, CaO, Al₂O₃, NaHCOs and powdered charcoal of plant origin.

## Description

### OBJECT OF THE INVENTION

The invention, as expressed in the wording of the present specification, refers to a product that absorbs hydrogen sulphide which provides, to the function for which it is intended, advantages and characteristics, described in detail below, which represent an improvement of the present state of the art.

More specifically, the object of the invention focuses on an absorbent product whose purpose is to constitute a sustainable gas absorbent medium with low charcoal content, practically without alumina and capable of absorbing H₂S (hydrogen sulphide) generated in a wide spectrum of final applications, such as an urban or waste water treatment plant, with equipment exposed to suffering corrosion or generating odors in general, with the objective of desulfurizing contaminated streams and preventing the corrosion of materials susceptible to being oxidized, either in installations or for example in packaged equipment, distinguished by the fact that the aforementioned absorbent material in pellet form, which preferably consists of a substrate impregnated with KOH (potassium hydroxide) and MgO (magnesium oxide), which has undergone an extrusion process, has a H₂S removal capacity of more than 25% by weight, which represents a very competitive alternative solution in the markets specified above with respect to what is currently known, due to its lower cost and environmental footprint.

### FIELD OF APPLICATION OF THE INVENTION

The field of application of the present invention is framed within the sector of the industry dedicated to the filtration of gases, specifically in the sector of urban or waste water purification, where complex emissions of substances with low levels of olfactory perception are generated, where H₂S is one of the main pollutants to be eliminated, as well as in the sector of the industry dedicated to the application of solutions to avoid or limit corrosion by oxidation.

### BACKGROUND OF THE INVENTION

Currently, a wide variety of products are available for the removal of H₂S at low-moderate concentrations. However, none of these products has such a low activated charcoal content and practically no alumina as the one proposed by the present invention.

The products currently used for H₂S removal can be divided into three main groups: charcoal-based products, alumina-based products and phyllosilicate-based products.

On the one hand, we have the large producers of activated charcoal, among which we find large multinational companies and Chinese companies. All of them work exclusively with pure charcoal. What does change is the origin of the coal (peat, vegetable, semi-anthracite, bituminous...). In some cases, they impregnate it with KOH, KOH-KI or carbonates, and in others they move towards high value-added carbons (impregnated with metal oxides or with a specific pore size that has catalytic properties). These companies dominate the odor market through equipment using bulk charcoal, in water treatment plants, for example. For this group of companies, charcoal production is a highly costly process in terms of energy, and it is also highly polluting. To avoid such contamination, a series of measures must be taken that substantially increase the cost of the process. Initially, coal production shifted from Europe to China, where around 50% of the world's charcoal production was centralized. However, in recent years, China has been implementing strong environmental measures to reduce high levels of pollution, which has led to an increase in the price of the product. The use of charcoal is very limited, most of the production of semi-anthracite or bituminous coal is used for gas purification and these coals are not a regenerative resource. These types of companies have developed high value-added products with H₂S absorption capacities between 40-70% by weight. However, for the scrubber market they offer low-cost products such as charcoals impregnated with KOH, NaOH or carbonates made from coals mostly of mineral origin of CTCs (Carbon Tetrachloride) between 50 and 60, reaching H2S removal capacity values between 10 and 20% by weight, while the economic option proposed by the Chinese market consists of impregnating coals of lower qualities, CTCs of 30-40, reaching H2S removal capacity values between 2-10% by weight.

The second group of products currently known includes companies that mix activated charcoal with activated alumina. These include Purafil (USA), Alphasorb (South Africa), recently taken over by Freudenberg (Germany), Camfil (Sweden) and AAF (American Air Filtration, USA). Reactive alumina is a raw material that gives the product very good mechanical properties in terms of hardness, but it is a very expensive product. Furthermore, worldwide, the carbon footprint of aluminum is more than 10 kg CO2/kg of aluminum (even up to 20 kg CO2/kg of aluminum in some cases). Aluminum used in Europe currently averages 8.6 kg CO2/kg of aluminum. Most of this CO2 is attributable to the electricity source. The use of "green electricity" could lower these emission levels to values around 4 kg of CO2. However, the situation today is that alumina production is a very unsustainable production. There are currently three outstanding alumina-based products on the market with good acceptance. Freudenberg's CCP 310, Purafil's Puracarb/Odorcarb and CamPure 15 achieve H2S absorption capacities of around 15, 20 and 14% by weight (according to data sheet), respectively. The alumina content of these products is between 30 and 45%, being the majority product, while powdered activated charcoal is between 20 and 35%. All three products have high market selling prices, and do not use renewable wood charcoal. This type of product is very focused on the corrosion market.

Finally, there are companies such as Bioconservación (Spain) that avoid the use of alumina by mixing it with sepiolite. This company seeks to develop high-end products using very large amounts of activated charcoal, around 30-40%. Its products have low densities, between 450 and 550 Kg/m3. However, these products have insufficient physical properties for the conditions in which they usually work, and even at high humidity levels, they may eventually decompose. Despite this, this product, due to its high capacity that can be between 60-80% by weight (according to technical data sheet), displaces in water purification module applications the equipment that was dominated by Purafil and Freudenberg. The fact that a high resistance to humidity is not necessary in applications with modules makes it an attractive product due to its high autonomy.

Currently, in a large number of cases, the price is the selling point, maintaining a minimum capacity, but products with low capacity and very economical are chosen. For this reason, and as we have already mentioned, countries such as China, with their high production capacity and lower costs, make it possible to have very cheap products. Therefore, a product such as the one developed here, with a low charcoal content (well below 35%), practically without alumina and with aluminosilicates, which provides good mechanical properties, can be a very competitive alternative solution compared to what is known for its price and technical performance.

Finally, as documents closer of the state of the art, we can mention:
- Document WO8902412A, which refers to a solid composition, in pellet form, for removing hydrogen sulphide from gaseous streams or ambient air.
- Document WO2009120744A1, which discloses solid products for removing hydrogen sulphide from gases.
- US3953587A, describing a zeolite-based hydrogen sulphide absorbing composition.

However, none of them describe a product that absorbs hydrogen sulphide with all the components of the absorbent product which are the subject matter of the present invention and contained in claim 1.

### DISCLOSURE OF THE INVENTION

The product that absorbs hydrogen sulphide which the invention proposes is an improved alternative to what is already known, the characterizing details which make it possible, and which distinguish it being conveniently set forth in the final claims accompanying the present description.

What the invention proposes, as has been pointed out above, is a gas absorbing product which advantageously is a sustainable product with low charcoal content, practically without alumina, that is to say, only with a minimum percentage of aluminum oxide, and capable of absorbing H₂S (hydrogen sulphide) generated in installations such as an urban or waste water treatment plant, equipment exposed to suffer corrosion or generate odors in general, with the objective of desulfurizing contaminated currents and avoiding the corrosion of materials susceptible to be oxidized, which, preferably consists of a granulated substrate (composed of raw materials in a particle size between 1 and 500 microns), impregnated with KOH (potassium hydroxide) in flakes that is added as a liquid solution over the mixture of the rest of solid products, MgO (magnesium oxide) and a series of oxides in smaller quantities but key to its optimal operation, which has undergone an extrusion process that, once cut, gives it pellet form.

More specifically, what the invention proposes is an absorbent product composed of an exclusive mixture of porous materials in the form of granules, distinguished by the fact that said granules minimize the use of activated alumina and the use of high charcoal content, in addition to using regenerated vegetable charcoal in the formulation, which results in a product with a smaller carbon footprint, in other words, a more sustainable product.

More specifically the composition of the absorbent product object of the invention comprises a mixture of activated charcoal in vegetable powder form, a mixture of different aluminosilicates, metal oxides, a hydroxide, an amphoteric substance and a binder. The proportions of these compounds achieve the appropriate porosity that gives the absorbent a competitive capacity value and good mechanical properties.

More specifically, the product comprises zeolites, KOH, MgO, CaO, Al₂O₃, SiO₂, Fe₂O₃, TiO₂, NaHCOs and powdered charcoal of plant origin.

Finally, it should be noted that the formulated absorbent material can be composed of two distinct types of formulations:
- one with MgO and KOH;
and another with MgO, KOH and, in addition, KI (potassium iodide), seeking speed in chemisorption, essential in the corrosion market.

Furthermore, in another embodiment, the material, regardless of whether it includes KI, may also further include CuO (copper oxide).

With the introduction of this raw material (CuO), the product is particularly fast and allows reaching capacities around 45-50%, doubling that of the base formulation. Thus, the absorbent product is suitable not only for the above-mentioned applications, but also for use in biogas desulfurization.

In a preferred embodiment, the product comprises said elements in the following percentage ranges:
- zeolites, between 40 and 70%
- KOH, between 2 and 8%
- MgO, between 1 and 10%
- CaO, between 3 and 10%
- Al₂O₃, between 0.1 y 5%
- SiO₂ between 1 and 7%
- Fe₂O₃, between 0.1 and 3%
- TiO₂ between 0.1 and 1%
- NaHCOs between 1 and 15%
- charcoal powder of plant origin between 10 and 35%

In a preferred embodiment, the product comprises said elements in the following percentages:
- zeolites, 49%
- KOH, 4.5%
- MgO, 2%
- CaO, 7%
- Al₂O₃, 2%
- SiO₂, 4%
- Fe₂O₃, 2%
- TiO₂, 1%
- NaHCOs 3,5%
- powdered charcoal of plant origin 25%

In an embodiment in which it further includes KI, KI is preferably included in a percentage of 2%.

And, in another embodiment in which it further includes CuO, the latter, preferably, is included in a percentage of 1%.

In the following table (Table 0), a concrete example of the realization of the product is presented, in an option of the same eco for a production of 340 Kgs, where the quantity that contains the formulation of each one of its components is observed:

**Table 0**

| | (%) | Kgs |
|---|---|---|
| Charcoal | 25 | 85 |
| Zeolite | 49 | 166.6 |
| KOH | 4.5 | 15.3 |
| MgO | 2 | 6.8 |
| NaHCO₃ | 3.5 | 11.9 |
| CaO | 7 | 23.8 |
| SiO2 | 4 | 13.6 |
| Al₂O₃ | 2 | 6.8 |
| Fe₂O₃ | 2 | 6.8 |
| TiO₂ | 1 | 3.4 |
| Total | 100 | 340 |

The production of the example shown in the table is carried out as follows:
First, all the solid compounds are mixed dry. At the same time, KOH flakes are dissolved in 100 - 200 L of water. Once we have the solid mixture well homogeneous, the KOH solution is added, and the wet mass is mixed until a good mixture of all the compounds is obtained. This mixture can now be extruded, and the product can be obtained in a marketable peller format.

Thus, in a preferred embodiment of the product it is made up of a substrate composed of the remaining elements and impregnated with the MgO and KOH, and where appropriate the KI and/or CuO, in the form of granules, preferably in the form of pellets obtained by extrusion. Also, in one form of use, the product is incorporated inside an envelope or similar porous container, although, in the preferred form, the product is marketed in 25 kg bags or in bulk.

As mentioned above, the main advantage of the new formulation is that such product allows to extend the life of the equipment in which it is applied, for example a reactor packed with the product in bulk or similar, which allows to reduce costs significantly. This increase in H₂S absorption capacity of up to 25% in minimum weight makes it possible to space out material replacements, reducing maintenance costs, investment in product purchase and management of the final spent product.

At the same time, the sustainability of the raw materials used in the development of this new formulation reduces the impact on the environment.

Table 1 below shows a comparison of the charcoal sector in terms of coal qualities.

**Table 1. Charcoal-based products impregnated with KOH.**

| CTC | H2S absorption capacity (% in weight) |
|---|---|
| 40 | 4 - 10 |
| 50 | 10 - 15 |
| 60 | 18 - 22 |

As can be seen in the aforementioned Table 1, with the new formulation presented by the product object of the invention, the highest quality charcoal, CTC 60, is surpassed, since the product guarantees a minimum capacity of 25% by weight. However, most of these products currently on the market are composed of more than 95-98% charcoal of mineral origin, non-regenerable.

On the other hand, the group of competitors that mix activated charcoal with activated alumina also present capacity values similar to or below those of the product presented. Table 2 below shows this comparison and the percentages of the main raw materials.

**Table 2. Alumina-based products.**

| | CCP 310 (Freudenberg) | Puracarb (Purafil) | CamPure 15 (Camfil) |
|---|---|---|---|
| Activated charcoal (%) | < 20 | < 32 | 20 - 35 |
| Alumina (%) | 45 - 100 | < 32 | 30 - 60 |
| H2S absorption capacity (% dry) | 15 | 20 | 22 - 27 |

As shown in Table 2, alumina-based products are alternatives with much more competitive capabilities than charcoal-based products, in addition to offering generally good mechanical properties. However, the high alumina and charcoal contents make these products expensive and unsustainable.

Finally, the alternative offered by Bioconservación, mixing phyllosilicates with activated charcoal, offers very competitive capacities and competitive prices. However, the mechanical properties, which barely reach values of 1 Kgf/m2, make this option unreliable for applications where humidity percentages are always above 95%, and where the products must support the weight of beds that usually exceed minimum heights of 1-2 meters. In addition, charcoal contents are usually high, between 30-50%, which calls into question their level of sustainability.

Having sufficiently described the nature of the present invention, as well as the manner of putting it into practice, it is not considered necessary to further explain it so that any person skilled in the art may understand its scope and the advantages derived therefrom, it being noted that, within its essentiality, it may be put into practice in other forms of realization which differ in detail from the one indicated by way of example, and to which the protection claimed will also apply provided that its fundamental principle is not altered, changed or modified.

## Claims

1. Product that absorbs hydrogen sulphide which, applicable to absorb said H₂S (hydrogen sulphide) generated in facilities such as plants for the treatment of urban wastewater or sewage or in equipment exposed to corrosion or odor generation in general, is **characterized in that** it has a composition comprising: zeolites, KOH, MgO, CaO, Al₂O₃, NaHCOs and powdered charcoal of plant origin.

2. Product that absorbs hydrogen sulphide, according to claim 1, **characterized in that** it further comprises KI in its composition.

3. Product that absorbs hydrogen sulphide, according to claim 1 or 2, **characterized in that** it further comprises CuO in its composition.

4. Product that absorbs hydrogen sulphide, according to claim 1, **characterized in that** it comprises said elements in the following percentage ranges:
- zeolites, between 40 and 70%
- KOH, between 2 and 8%
- MgO, between 1 and 10%
- CaO, between 3 and 10%
- Al₂O₃, between 0.1 y 5%
- SiO₂ between 1 and 7%
- Fe₂O₃, between 0.1 and 3%
- TiO₂ between 0.1 and 1%
- NaHCOs between 1 and 15%
- charcoal powder of vegetable origin between 10 and 35%

5. Product that absorbs hydrogen sulphide, according to claim 4, **characterized in that** it comprises said elements in the following percentages:
- zeolites, 49%
- KOH, 4.5%
- MgO, 2%
- CaO, 7%
- Al₂O₃, 2%
- SiO₂, 4%
- Fe₂O₃, 2%
- TiO₂, 1%
- NaHCO₃ 3,5%
- powdered charcoal of vegetable origin 25%

6. Product that absorbs hydrogen sulphide, according to claim 2, **characterized in that** it comprises KI in a percentage of 2%.

7. Product that absorbs hydrogen sulphide, according to claim 3, **characterized in that** it comprises CuO in a percentage of 1%.

8. Product that absorbs hydrogen sulphide, according to any one of the previous claims, **characterized in that** it consists of a substrate in the form of granules impregnated with MgO and KOH, and if necessary, with KI and/or CuO.

9. Product that absorbs hydrogen sulphide, according to any one of the previous claims, **characterized in that** it consists of a pellet-shaped granulate obtained by extrusion.
